# EUROPÄISCHE PATENTSCHRIFT

(11) **EP 3 888 222 B1**
(45) Veröffentlichungstag und Bekanntmachung des Hinweises auf die Patenterteilung: **12.08.2026**
(21) Anmeldenummer: 19801329.4
(22) Anmeldetag: 08.11.2019
(51) Int. Cl.: H02J 7/00

(54) **VORRICHTUNG ZUM SICHEREN AUSSCHALTEN EINES AKKUBETRIEBENEN GERAETS SOWIE AKKUBETRIEBENES GERAET MIT EINER ERFINDUNGSGEMAESSEN VORRICHTUNG**
DEVICE FOR SAFELY SWITCHING OFF A BATTERY-OPERATED APPARATUS AND BATTERY OPERATED APPARATUS HAVING A DEVICE ACCORDING TO THE INVENTION
DISPOSITIF POUR L'ARRÊT SÛR D'UN APPAREIL FONCTIONNANT SUR ACCUMULATEUR AINSI QU'APPAREIL FONCTIONNANT SUR ACCUMULATEUR POURVU D'UN DISPOSITIF SELON L'INVENTION

(30) Priorität: 30.11.2018 DE 102018220749; 28.12.2018 DE 102018251783
(43) Veröffentlichungstag der Anmeldung: 06.10.2021
(73) Patentinhaber: Robert Bosch GmbH, 70442 Stuttgart (DE)
(72) Erfinder: MACK, Juergen, 73035 Goeppingen (DE); FRIESE, Andreas, 72285 Pfalzgrafenweiler (DE)
(86) Internationale Anmeldenummer: PCT/EP2019/080692
(87) Internationale Veröffentlichungsnummer: WO 2020/108958

(56) Entgegenhaltungen:
- EP-A1- 1 343 241
- EP-A1- 2 905 866
- WO-A1-96/16512
- DE-A1- 102012 219 299

## Beschreibung

Die Erfindung betrifft eine Vorrichtung zum sicheren Ausschalten eines akkubetriebenen Geräts sowie ein akkubetriebenes Gerät mit einer erfindungsgemäßen Vorrichtung nach der Gattung der unabhängigen Ansprüche.

### Stand der Technik

Durch die stetig zunehmenden Anforderungen an die funktionale Sicherheit von elektrischen Geräten bzw. elektronischen Baugruppen ergeben sich zusätzliche Maßnahmen hinsichtlich ihres Entwurfs und ihrer Auslegung. Darüber hinaus haben Bediener insbesondere akkubetriebener Geräte eine steigende Erwartungshaltung an ihre funktionale Betriebssicherheit. Diese funktionale Sicherheit wird im Allgemeinen dadurch erreicht, dass das Gerät im Fehlerfall beispielsweise den bestimmungsgemäßen Betrieb bzw. die bestimmungesgemäße Funktion verlässt und in einen sicheren Betriebszustand übergeht. Insbesondere bei akkubetriebenen elektronischen Geräten und Baugruppen gilt es deshalb, eine weitere Entladung des Akkus zu vermeiden und den Betrieb ggf. weiterer mit den elektronischen Baugruppen verbundener Aktoren einzustellen. Dabei können als Aktoren sowohl Elektromotoren als auch Lampen, Heizelemente oder dergleichen verstanden werden. Eine besondere Anforderung an die Betriebssicherheit ergibt sich bei Geräten mit festverbauten bzw. nicht wechselbaren Akkuzellen, da diese Geräte in der Regel nicht einfach durch die Entnahme des Akkus abgeschaltet werden können. Relevanter Stand der Technik ist z.B. in der EP 1 343 241 A1, der WO 96/16512 A1, der DE 10 2012 219299 A1 oder der EP 2 905 866 A1 genannt.

Es ist Aufgabe der Erfindung, das Ausschalten eines akkubetriebenen Geräts sicherzustellen bzw. den unkontrollierten Betrieb oder Anlauf eines elektrischen Antriebs des Geräts zu vermeiden. Dies gilt insbesondere dann, wenn ein einfacher Fehler auf Bauelementebene vorliegt und gleichzeitig die programmierbare Logik - i.d.R. ein Mikrocontroller des Geräts - die geplante Ablaufsteuerung verlässt.

### Vorteile der Erfindung

Die Erfindung betrifft eine Vorrichtung zum sicheren Ausschalten eines akkubetriebenen gemäss dem Anspruch 1.

Als akkubetriebenes Gerät soll jedes Gerät verstanden werden, das über mindestens eine einstellbare Leistungsstufe oder mindestens einen einstellbaren Betriebsmodus verfügt. Dabei kommen sowohl akkubetriebene Geräte mit einem Wechselakku als auch solche mit einem nicht wechselbaren, also fest eingebauten, Akku in Form einer oder mehrerer Akkuzellen in Frage. Ein Beispiel für akkubetriebene Geräte sind Elektrowerkzeuge zur Bearbeitung von Werkstücken mittels eines elektrisch angetriebenen Einsatzwerkzeugs. Dabei kann das Elektrowerkzeug sowohl als Elektrohandwerkzeug als auch als stationäre Elektrowerkzeugmaschine ausgebildet sein. Typische Elektrowerkzeuge sind in diesem Zusammenhang Hand- oder Standbohrmaschinen, Schrauber, Schlagbohrmaschinen, Hobel, Winkelschleifer, Schwingschleifer, Poliermaschinen oder dergleichen. Als akkubetriebenes Gerät kommen aber auch Gartengeräte wie Rasenmäher, Rasentrimmer, Astsägen oder dergleichen in Frage. Weiterhin ist die erfindungsgemäße Vorrichtung für akkubetriebene Baustellengeräte, wie Gebläse, Pumpen, Mischmaschinen ebenso nutzbar, wie für akkubetriebene Haushaltgeräte, wie Staubsauger, Mobilkochplatten, Mixer, etc.

Eine Akkuzelle ist typischerweise als eine galvanische Zelle ausgebildet, die einen Aufbau aufweist, bei dem ein Zellpol an einem Ende und ein weiterer Zellpol an einem gegenüberliegenden Ende zu liegen kommt. Insbesondere weist die Akkuzelle an einem Ende einen positiven Zellpol und an einem gegenüberliegenden Ende einen negativen Zellpol auf. Bevorzugt sind die Akkuzellen als lithiumbasierte Akkuzellen, z.B. Li-Ion, Li-Po, Li-Metall oder dergleichen, ausgebildet. Die Erfindung ist aber für akkubetriebene Geräte mit Ni-Cd-, Ni-MH-Zellen oder andere geeignete Zellenarten anwendbar. Bei gängigen Li-lon-Akkuzellen mit einer Zellspannung von 3,6 V ergeben sich beispielhafte Akkuspannungen von 3,6 V, 7,2 V, 10, 8 V, 14,4 V, 18 V, 36 V etc. Bevorzugt ist die Akkuzelle als zumindest im Wesentlichen zylinderförmige Rundzelle ausgebildet, wobei die Zellpole an Enden der Zylinderform angeordnet sind. Die Erfindung ist jedoch nicht von der Art und Bauform der verwendeten Akkuzellen abhängig, sondern kann auf beliebige Akkus und Akkuzellen angewendet werden.

Um eine Schaltabhängigkeit zwischen dem ersten und dem zweiten Schalter bzw. Taster zu erzielen, sind diese in vorteilhafter Weise miteinander mechanisch gekoppelt. Die mechanische Kopplung hat überdies den Vorteil, dass die beiden Schalter bzw. Taster örtlich voneinander getrennt im Gerät untergebracht werden können. Zudem ist damit eine vereinfachte und sichere Bedienung erzielbar, da das Gerät aus jeder Leistungsstufe bzw. aus jedem Betriebsmodus heraus ausgeschaltet werden kann.

Die Vorrichtung weist einen elektronischen Leistungsschalter, insbesondere einen MOSFET oder IGBT, in einem Leistungspfad des Geräts zur Ansteuerung zumindest eines elektrischen Verbrauchers, insbesondere eines Elektromotors, auf. Der elektronische Leistungsschalter wird erfindungsgemäss in Abhängigkeit von der Schaltlogik gesteuert. Somit ist sichergestellt, dass bei einem Fehler in jeweils einem der Schalter bzw. Taster stets eine manuelle Abschaltung durch den Anwender möglich ist.

Zur Steuerung der Schaltlogik zwischen dem zweiten und dem ersten Schalter bzw. Taster weist die erfindungsgemäße Vorrichtung einen Mikrocontroller auf. Dabei kann jeder handelsübliche Mikrocontroller zum Einsatz kommen, der für die Steuerung geeignet ist. Der Mikrocontroller erfasst den zumindest einen Zustand des zweiten Schalters bzw. Tasters mittels eines digitalen Zustandssignals. Dieses wird üblicherweise per Analog-Digital-Converter (ADC) aus dem mittels eines Spannungsteiler-Widerstandsnetzwerk erzeugten analogen Zustandssignal des zweiten Schalters bzw. Tasters gewonnen.

Mittels eines Fenster-Komparators wird ein analoges Spannungssignal des zweiten Schalters bzw. Tasters in ein binäres Zustandssignal für den ein- bzw. ausgeschalteten Zustand des Geräts bzw. der leistungsstufen überführt. Der Komparator im Kreis des ersten Schalters bzw. Tasters kann ein einfacher Komparator, ein Schmitt- Trigger, ein Fensterkomparator oder dergleichen sein. In Abhängigkeit des binären Zustandssignals steuert der Mikrocontroller eine nachgeschaltete Leistungsendstufe mit einem entsprechenden pulsweitenmodulierten Signal an, um über die Leistungsendstufe den elektrischen Verbraucher, insbesondere den Elektromotor, des Geräts mit der gewünschten Leistung bzw. für den gewünschten Betriebsmodus zu betreiben. Die Ansteuerung der Leistungsendstufe mit dem pulsweitenmodulierten Signal erfolgt dabei über einen ersten Eingang eines UND-Gatters, dessen weiterem Eingang das binäre Zustandssignal des zweiten Schalters bzw. Tasters zugeführt ist.

Weiterhin weist die Schaltlogik der erfindungsgemäßen Vorrichtung ein ODER-Gatter auf, über das das binäre Zustandssignal des zweiten Schalters bzw. Tasters mit einem binären Zustandssignal des ersten Schalters bzw. Tasters zur Steuerung eines in einem Signalpfad der Vorrichtung angeordneten Signalschalters verknüpft ist.

Um eine Verstimmung der elektrischen Signale des Mikrocontrollers zu vermeiden, wenn dieser beispielsweise seinen vorgesehen Programmablauf infolge eines internen Fehlers verlässt, ist es weiterhin vorteilhaft, dem Mikrocontroller die binären Zustandsignale über eine aus einem Widerstand und eine Diode bestehenden Reihenschaltung, die ein Entkopplungsnetzwerk bildet, rückwirkungsfrei zuzuführen. Im Falle analoger Signale können auch rückwirkungsfreie Entkopplungsnetzwerke in Form von Impedanzwandlern (Buffern) zum Einsatz kommen.

Die Erfindung betrifft auch ein akkubetriebenes Gerät mit einer erfindungsgemäßen Vorrichtung. Als akkubetriebenes Gerät kommt dabei jedes der eingangs erwähnten Geräte in Frage. Vorzugsweise weist das akkubetriebene Gerät einen nicht wechselbaren Akku auf.

### Ausführungsbeispiele

### Zeichnung

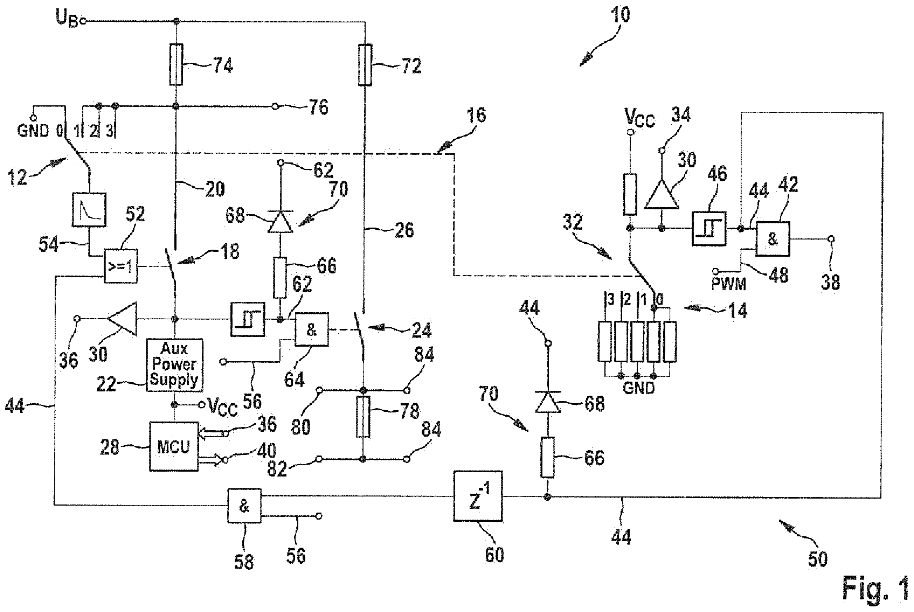

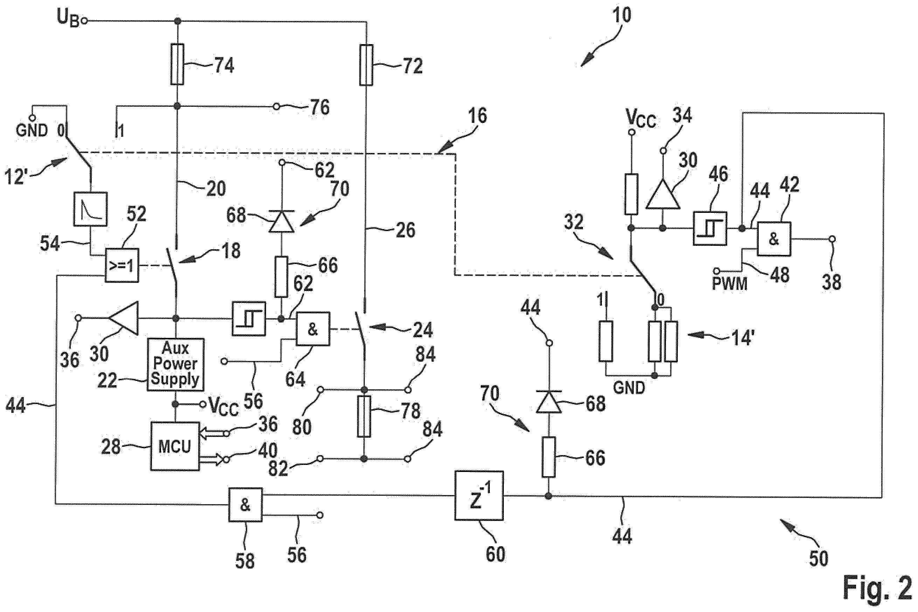

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten.

### Es zeigen

- Fig. 1:: ein Blockschaltbild einer ersten Ausführungsform der erfindungsgemäßen Vorrichtung und
- Fig. 2:: ein Blockschaltbild einer zweiten Ausführungsform der erfindungsgemäßen Vorrichtung.

### Beschreibung der Ausführungsbeispiele

Figur 1 zeigt ein Blockschaltbild eines erstes Ausführungsbeispiels der erfindungsgemäßen Vorrichtung 10 zum sicheren Ausschalten eines akkubetriebenen Geräts. Das akkubetriebene Gerät selbst ist nicht dargestellt. Wie eingangs erwähnt, soll als akkubetriebenes Gerät im Sinne der Erfindung jedes Gerät verstanden werden, das über mindestens eine einstellbare Leistungsstufe oder mindestens einen einstellbaren Betriebsmodus verfügt. Zwar kommen sowohl akkubetriebene Geräte mit einem Wechselakku als auch solche mit einem nicht wechselbaren, also fest eingebauten Akku in Form einer oder mehrerer Akkuzellen in Frage, jedoch ist die Erfindung primär auf akkubetriebene Geräte mit fest eingebauten Akkuzellen gerichtet, da hier ein sicheres Ausschalten nicht einfach durch eine schnelle Entnahme eines Wechselakkus möglich ist. Doch auch für Geräte mit einem Wechselakku kann die Erfindung von Bedeutung sein, um ein sicheres Ausschalten zum Beispiel bei verklemmtem Wechselakku oder nicht mehr funktionierender Entriegelung des Wechselakkus oder bei einer extremen Hitzeentwicklung bzw. einem Brand des Wechselakkus zu ermöglichen. Als akkubetriebene Geräte kommen Elektrowerkzeuge zur Bearbeitung von Werkstücken mittels eines elektrisch angetriebenen Einsatzwerkzeugs aber auch Gartengeräte, Baustellengeräte und Haushaltgeräte in Frage, die insbesondere über einen leistungsintensiven Antrieb, beispielsweise einen Elektromotor, verfügen. Da derartige Geräte sowie die sie mit Energie versorgenden Akkus dem Fachmann bekannt sind, soll hierauf nicht näher eingegangen werden.

Die in Figur 1 gezeigte Vorrichtung 10 soll ohne Einschränkung der Erfindung für einen akkubetriebenen Handstaubsauger erläutert werden. Die Vorrichtung 10 weist einen ersten Schalter 12 zum Ein- oder Ausschalten des Geräts (On/Off Switch) und einen als Umschalter ausgebildeten zweiten Schalter 14 zur Einstellung zumindest einer Leistungsstufe oder eines Betriebsmodus des Geräts (Power bzw. Mode Selector Switch) auf. Der erste Schalter 12 ist derart mit dem zweiten Schalter 14 gekoppelt, dass die zumindest eine Leistungsstufe oder der zumindest eine Betriebsmodus nur einstellbar ist, wenn das Gerät eingeschaltet ist. Die gestrichelt dargestellte Kopplung 16 zwischen dem ersten und dem zweiten Schalter 12, 14 ist mechanisch ausgeführt und kann beispielsweise durch ein Getriebe, einen Stangen- oder Bolzenantrieb, eine gemeinsame Welle oder dergleichen erfolgen. Weiterhin können der erste und der zweite Schalter 12, 14 örtlich getrennt voneinander in dem Gehäuse des Handstaubsaugers oder aber auch innerhalb eines gemeinsamen Schaltermoduls angeordnet sein. Es sei angemerkt, dass statt der beiden Schalter 12, 14 auch zwei entsprechend miteinander gekoppelte Taster zum Einsatz kommen können. Im Folgenden soll jedoch weiterhin von Schaltern ausgegangen werden.

Der erste Schalter 12 aktiviert im Wesentlichen über einen elektronischen Schalter 18 in einem Signalpfad 20 eine Hilfsenergieversorgung 22 und einen elektronischen Leistungsschalter 24 eines Leistungspfads 26 der Vorrichtung 10. Der elektronische Leistungsschalter 24 kann beispielsweise als MOSFET oder IGBT ausgebildet sein. Ebenso käme ein Leistungsrelais in Frage. Der elektronische Schalter 18 des Signalpfades ist vorzugsweise als Bipolar-Transistor oder MOSFET ausgebildet.

Die Auswertung der Schaltzustände des elektronischen Schalters 18 im Signalpfad 20 und des zweiten Schalters 14 erfolgt mittels eines Mikrocontrollers (MCU) 28, der über die Hilfsenergieversorgung 22 unabhängig von einer Energieversorgung der Vorrichtung 10 durch einen nicht gezeigten Akku des Geräts an den Punkten U_{B} und GND mit Energie versorgt wird. Dazu werden die analogen Spannungssignale des Signalpfads 20 und der mittels eines Spannungsteiler-Netzwerks 32 umgesetzten Schaltpositionen des zweiten Schalters 14 jeweils über einen Analog-Digital-Converter (ADC) 30 in digitale Zustandssignale 34 überführt und an einen Eingang 36 des Mikrocontrollers 28 übergeben. Die als Analog-Digital-Converter 30 ausgestaltete Baugruppe ist ein Impedanzwandler für analoge Signale, um die Rückwirkungsfreiheit bzw. eine Entkopplung zu realisieren. Üblicherweise befindet sie sich innerhalb des Mikrocontrollers 28, wodurch die entsprechenden digitalen Signale lediglich intern vorliegen.

Befindet sich der erste Schalter 12 außerhalb seiner Off-Stellung (Position 0), kann der Anwender mittels des zweiten Schalters 14 drei unterschiedliche Leistungsstufen oder Betriebsmodi des Handstaubsaugers einstellen (Positionen 1, 2, 3). In Abhängigkeit des Zustandssignals 34 des zweiten Schalters 14 steuert der Mikrocontroller 28 über einen Ausgang 40 eine mit einem Anschlusspunkt 38 verbundene Leistungsendstufe (nicht gezeigt) für einen nachgeschalteten Elektromotor des Handstaubsaugers mit einem pulsweitenmodulierten Signal (PWM) an. Dazu wird an einem ersten Eingang eines UND-Gatters 42 das mit einem Fenster-Komparator 46 in ein binäres Zustandssignal 44 überführte analoge Spannungssignal des zweiten Schalters 14 angelegt. Das binäre Zustandssignal 44 weist auf Grund des vorgeschalteten Fenster-Komparators 46 nur in den Leistungsstufen 1-3 den Wert 1 auf. In allen Anderen Fällen bzw. Schalterpositionen oder Spannungswerten weist das binäre Zustandssignal 44 den Wert 0 auf. Am anderen Eingang des UND-Gatters 42 liegt das PWM-Signal 48 des Mikrocontrollers 28 an, so dass dieses nur an die Leistungsendstufe weitergereicht wird, wenn das binäre Zustandssignal 44 und das PWM-Signal 48 jeweils den logischen Wert 1 aufweist.

Erfindungsgemäß ist nun vorgesehen, dass der zumindest eine Zustand des zweiten Schalters 14 über eine elektronische, insbesondere digitale, Schaltlogik 50 mit dem ersten Schalter 12 verknüpft ist. Dazu weist die Schaltlogik 50 ein ODER-Gatter 52 auf, über das das binäre Zustandsignal 44 des zweiten Schalters 14 mit einem binären Zustandssginal 54 des ersten Schalters 12 zur Steuerung des im Signalpfad 20 angeordneten Signalschalters 18 verknüpft ist. Das binäre Zustandssignal 54 weist den Wert 0 auf, wenn sich der erste Schalter 12 in Position 0 befindet, und hat ansonsten den Wert 1. Infolge eines Differenzierungsglieds 55 liegt das binäre Zustandssignal 54 nur als ein kurzer Einschaltimpuls an. Weiterhin wird der elektronische Leistungsschalter 24 in Abhängigkeit von der Schaltlogik 50 gesteuert. Dazu wird über den Ausgang 40 des Mikrocontrollers 28 ein binäres Logiksignal 56 an ein UND-Gatter 58 gegeben, an dessen anderem Eingang das mit einem Verzögerungsglied 60 zum Ausschalten zeitverzögerte, binäre Zustandsignal 44 des zweiten Schalters 14 anliegt. Zusätzlich wird der elektronische Leistungsschalter 24 des Leistungspfads 26 über ein weiteres binäres Logiksignal 56 des Mikrocontrollers 28 gesteuert, das zusammen mit einem binären Zustandssignal 62 des Signalschalters 18 an einem dem Leistungsschalter 24 vorgeschalteten UND-Gatter 64 anliegt. Somit ist sichergestellt, dass bei einem Fehler in jeweils einem Schalter stets eine manuelle Abschaltung durch den Anwender möglich ist.

Um eine Verstimmung der binären Zustandsignale 44, 62 des Mikrocontrollers 28 zu vermeiden, wenn dieser beispielsweise seinen vorgesehen Programmablauf infolge eines internen Fehlers verlässt, ist es weiterhin vorteilhaft, dem Mikrocontroller 28 die binären Zustandsignale 44, 62 über jeweils ein aus einer in Reihe zu einem Widerstand 66 geschalteten Diode 68 bestehendes Entkopplungsnetzwerk 70 rückwirkungsfrei zuzuführen. Im Falle analoger Signale können auch rückwirkungsfreie Entkopplungsnetzwerke in Form von Impedanzwandlern (Buffern) zum Einsatz kommen.

Der Leistungspfad 26 ist durch eine erste Sicherung 72 abgesichert, die in Reihe zum elektronischen Leistungsschalter 24 geschaltet ist und den über einen Versorgungsanschluss 80 angeschlossenen Elektromotor des Handstaubsaugers schützt. Entsprechend ist auch der Signalpfad durch eine zweite Sicherung 74 abgesichert. Die zweite Sicherung 74 schützt zudem einen Ladestromkreis 76 für den Akku des Handstaubsaugers. Eine weitere kaskadierte Anordnung von Sicherungen, beispielsweise in Gestalt einer dritten Sicherung 78, dient zur Absicherung weiterer Verbraucher mit einem geringeren Anschlusswert an zumindest einem weiteren Versorgungsanschluss 82 der Vorrichtung 10. Über Anschlüsse 84 können die Zustände und/oder Leistungswerte der elektrischen Verbraucher an den Eingang 36 des Mikrocontrollers 28 übergeben werden.

In Figur 2 ist das Blockschaltbild einer alternativen Ausführungsform der in Figur 1 gezeigten Vorrichtung 10 dargestellt. So sind beispielsweise auch Applikationen denkbar, die lediglich auf einen als einfachen Umschalter (Positionen 0, 1) ausgebildeten ersten und zweiten Schalter 12', 14' zurückgreifen. Da ansonsten sämtliche Bauelemente und Schaltungslogiken identisch zu Figur 1 sind, soll auf eine erneute Beschreibung der erfindungsgemäßen Vorrichtung 10 gemäß Figur 2 verzichtet werden.

Es sei abschließend noch darauf hingewiesen, dass die gezeigten Ausführungsbeispiele weder auf die Figuren 1 und 2 noch auf die Anordnung der einzelnen Bauelemente beschränkt sind.

## Patentansprüche

1. Vorrichtung (10) zum sicheren Ausschalten eines akkubetriebenen Geräts, insbesondere eines Geräts mit nicht wechselbarem Akku, wobei die Vorrichtung (10) einen ersten Schalter bzw. Taster (12; 12') zum Ein- oder Ausschalten des Geräts und einen zweiten Schalter bzw. Taster (14; 14') zur Einstellung zumindest zweier Leistungsstufen oder Betriebsmodi des Geräts aufweist, **dadurch gekennzeichnet, dass** der erste Schalter bzw. Taster (12; 12') mit dem zweiten Schalter bzw. Taster (14; 14') derart gekoppelt ist, dass die zumindest zwei Leistungsstufen oder Betriebsmodi nur von einem Anwender mittels des zweiten Schalters bzw. Tasters (14; 14') einstellbar sind, wenn das Gerät eingeschaltet ist, wobei der erste Schalter bzw. Taster (12; 12') über einen elektronischen Schalter (18) in einem Signalpfad (20) eine Hilfsenergieversorgung (22) und einen elektronischen Leistungsschalter (24), insbesondere einen MOSFET oder IGBT, in einem Leistungspfad (26) zur Ansteuerung zumindest eines elektrischen Verbrauchers, insbesondere eines Elektromotors, aktiviert oder deaktiviert, und zumindest ein Zustand des zweiten Schalters bzw. Tasters (14; 14') über eine elektronische, insbesondere eine digitale, Schaltlogik (50) mit dem ersten Schalter bzw. Taster (12; 12') zur Steuerung des elektronischen Schalters (18) verknüpft ist, wobei der elektronische Leistungsschalter (24) in Abhängigkeit von der Schaltlogik (50) gesteuert ist.

2. Vorrichtung (10) nach Anspruch 1, **dadurch gekennzeichnet, dass** der erste Schalter bzw. Taster (12; 12') mit dem zweiten Schalter bzw. Taster (14; 14') mechanisch gekoppelt ist.

3. Vorrichtung (10) nach einem der vorhergehenden Ansprüche, **dadurch gekennzeichnet, dass** die Vorrichtung (10) einen Mikrocontroller (28) zur Steuerung der Schaltlogik (50) zwischen dem zweiten und dem ersten Schalter bzw. Taster (14, 12; 14', 12') aufweist.

4. Vorrichtung (10) nach Anspruch 3, **dadurch gekennzeichnet, dass** der Mikrocontroller (28) den zumindest einen Zustand des zweiten Schalters bzw. Tasters (14; 14') mittels eines digitalen Zustandssignals (34) erfasst.

5. Vorrichtung (10) nach Anspruch 4, **dadurch gekennzeichnet, dass** ein Fenster- Komparator (46) ein analoges Spannungssignal des zweiten Schalters bzw. Tasters (14; 14') in ein binäres Zustandssignal (44) für den ein- bzw. ausgeschalteten Zustand des Geräts überführt.

6. Vorrichtung (10) nach Anspruch 5, **dadurch gekennzeichnet, dass** der Mikrocontroller (28) eine nachgeschaltete Leistungsendstufe in Abhängigkeit des binären Zustandssignals (44) mit einem entsprechenden pulsweitenmodulierten Signal (48) ansteuert.

7. Vorrichtung (10) nach Anspruch 6, **dadurch gekennzeichnet, dass** die Ansteuerung der Leistungsendstufe mit dem pulsweitenmodulierten Signal (48) über einen ersten Eingang eines UND-Gatters (42) erfolgt, dessen weiterem Eingang das binäre Zustandssignal (44) zugeführt ist.

8. Vorrichtung (10) nach einem der vorhergehenden Ansprüche 5 bis 7, **dadurch gekennzeichnet, dass** die Schaltlogik (50) ein ODER-Gatter (52) aufweist, über das das binäre Zustandssignal (44) des zweiten Schalters bzw. Tasters (14; 14') mit einem binären Zustandssginal (54) des ersten Schalters bzw. Tasters (12; 12') zur Steuerung des elektronischen Schalters (18) verknüpft ist.

9. Vorrichtung (10) nach Anspruch 8, **dadurch gekennzeichnet, dass** die binären Zustandsignale (44, 54) dem Mikrocontroller (28) über ein aus einer in Reihe zu einem Widerstand (66) geschalteten Diode (68) bestehenden Entkopplungsnetzwerk (70) rückwirkungsfrei zugeführt sind.

10. Akkubetriebenes Gerät mit einer Vorrichtung (10) nach einem der vorhergehenden Ansprüche.

11. Akkubetriebenes Gerät nach Anspruch 10, **dadurch gekennzeichnet, dass** das Gerät einen nicht wechselbaren Akku aufweist.

## Claims

1. Apparatus (10) for safely switching off a rechargeable-battery-operated device, in particular a device having a non-replaceable rechargeable battery, wherein the apparatus (10) has a first switch or button (12; 12') for switching on or switching off the device and a second switch or button (14; 14') for setting at least two power levels or operating modes of the device, **characterized in that** the first switch or button (12; 12') is coupled to the second switch or button (14; 14') in such a way that the at least two power levels or operating modes are able to be set by a user by means of the second switch or button (14; 14') only if the device is switched on, wherein the first switch or button (12; 12') activates or deactivates an auxiliary energy supply (22) and an electronic power switch (24), in particular a MOSFET or IGBT, in a power path (26) via an electronic switch (18) in a signal path (20) in order to actuate at least one electrical load, in particular an electric motor, and at least one state of the second switch or button (14; 14') is linked to the first switch or button (12; 12') via electronic, in particular digital, switching logic (50) in order to control the electronic switch (18), wherein the electronic power switch (24) is controlled on the basis of the switching logic (50).

2. Apparatus (10) according to Claim 1, **characterized in that** the first switch or button (12; 12') is mechanically coupled to the second switch or button (14; 14').

3. Apparatus (10) according to either of the preceding claims, **characterized in that** the apparatus (10) has a microcontroller (28) for controlling the switching logic (50) between the second and the first switch or button (14, 12; 14', 12').

4. Apparatus (10) according to Claim 3, **characterized in that** the microcontroller (28) detects the at least one state of the second switch or button (14; 14') by means of a digital state signal (34).

5. Apparatus (10) according to Claim 4, **characterized in that** a window comparator (46) converts an analogue voltage signal of the second switch or button (14; 14') into a binary state signal (44) for the switched-on or switched-off state of the device.

6. Apparatus (10) according to Claim 5, **characterized in that** the microcontroller (28) actuates a downstream power output stage on the basis of the binary state signal (44) with a corresponding pulse-width-modulated signal (48).

7. Apparatus (10) according to Claim 6, **characterized in that** the actuation of the power output stage with the pulse-width-modulated signal (48) is carried out via a first input of an AND gate (42), the binary state signal (44) being supplied to the further input thereof.

8. Apparatus (10) according to one of the preceding Claims 5 to 7, **characterized in that** the switching logic (50) has an OR gate (52), via which the binary state signal (44) of the second switch or button (14; 14') is linked to a binary state signal (54) of the first switch or button (12; 12') in order to control the electronic switch (18).

9. Apparatus (10) according to Claim 8, **characterized in that** the binary state signals (44, 54) are supplied to the microcontroller (28) without feedback via a decoupling network (70) consisting of a diode (68) connected in series with a resistor (66).

10. Rechargeable-battery-operated device having an apparatus (10) according to one of the preceding claims.

11. Rechargeable-battery-operated device according to Claim 10, **characterized in that** the device has a non-replaceable rechargeable battery.

## Revendications

1. Dispositif (10) permettant d'éteindre de manière sûre un appareil fonctionnant sur batterie, en particulier un appareil à batterie non remplaçable, le dispositif (10) comportant un premier interrupteur ou bouton-poussoir (12 ; 12') pour allumer ou éteindre l'appareil et un deuxième interrupteur ou bouton-poussoir (14 ; 14') pour régler au moins deux étages de puissance ou modes de fonctionnement de l'appareil, **caractérisé en ce que** le premier interrupteur ou bouton-poussoir (12 ; 12') est couplé au deuxième interrupteur ou bouton-poussoir (14 ; 14') de telle manière que les au moins deux étages de puissance ou modes de fonctionnement ne peuvent être réglés que par un utilisateur au moyen du deuxième interrupteur ou bouton-poussoir (14 ; 14') lorsque l'appareil est allumé, le premier interrupteur ou bouton-poussoir (12 ; 12') activant ou désactivant, par un interrupteur électronique (18), dans une trajet de signal (20), une alimentation en énergie auxiliaire (22) et un interrupteur électronique de puissance (24), en particulier un MOSFET ou IGBT, dans un trajet de puissance (26) pour piloter au moins un consommateur électrique, en particulier un moteur électrique, et au moins un état du deuxième interrupteur ou bouton-poussoir (14 ; 14') étant lié par une logique de commutation (50) électronique, en particulier numérique, au premier interrupteur ou bouton-poussoir (12 ; 12') pour la commande de l'interrupteur électronique (18), l'interrupteur électronique de puissance (24) étant commandé en fonction de la logique de commutation (50).

2. Dispositif (10) selon la revendication 1, **caractérisé en ce que** le premier interrupteur ou bouton-poussoir (12 ; 12') est couplé mécaniquement au deuxième interrupteur ou bouton-poussoir (14 ; 14').

3. Dispositif (10) selon l'une des revendications précédentes, **caractérisé en ce que** le dispositif (10) comporte un microcontrôleur (28) pour commander la logique de commutation (50) entre le deuxième et le premier interrupteur ou bouton-poussoir (14, 12 ; 14', 12').

4. Dispositif (10) selon la revendication 3, **caractérisé en ce que** le microcontrôleur (28) détecte l'au moins un état du deuxième interrupteur ou bouton-poussoir (14 ; 14') au moyen d'un signal d'état numérique (34).

5. Dispositif (10) selon la revendication 4, **caractérisé en ce qu'**un comparateur à fenêtre (46) convertit un signal de tension analogique du deuxième interrupteur ou bouton-poussoir (14 ; 14') en un signal d'état binaire (44) pour l'état allumé ou éteint de l'appareil.

6. Dispositif (10) selon la revendication 5, **caractérisé en ce que** le microcontrôleur (28) pilote un étage de sortie de puissance en aval en fonction du signal d'état binaire (44) avec un signal modulé en largeur d'impulsion (48) correspondant.

7. Dispositif (10) selon la revendication 6, **caractérisé en ce que** le pilotage de l'étage de sortie de puissance avec le signal modulé en largeur d'impulsion (48) est effectué par une première entrée d'une porte ET (42), à l'autre entrée de laquelle est amené le signal d'état binaire (44).

8. Dispositif (10) selon l'une des revendications précédentes 5 à 7, **caractérisé en ce que** la logique de commutation (50) comporte une porte OU (52), par laquelle le signal d'état binaire (44) du deuxième interrupteur ou bouton-poussoir (14 ; 14') est lié à un signal d'état binaire (54) du premier interrupteur ou bouton-poussoir (12 ; 12') pour commander l'interrupteur électronique (18).

9. Dispositif (10) selon la revendication 8, **caractérisé en ce que** les signaux d'état binaires (44, 54) sont amenés sans rétroaction au microcontrôleur (70) par un réseau de découplage (28) constitué d'une diode (68) montée en série avec une résistance (66).

10. Appareil fonctionnant sur batterie avec un dispositif (10) selon l'une des revendications précédentes.

11. Appareil fonctionnant sur batterie selon la revendication 10, **caractérisé en ce que** l'appareil comporte une batterie non remplaçable.
